Europäisches Patentamt

European Patent Office

Office européen des brevets

(19)

(11) **EP 0 890 212 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **97916348.2**

(22) Anmeldetag: **17.03.1997**

(51) Int Cl.⁷: **H02J 3/06**, H02J 3/38

(86) Internationale Anmeldenummer:
**PCT/DE97/00543**

(87) Internationale Veröffentlichungsnummer:
**WO 97/37419 (09.10.1997 Gazette 1997/43)**

(54) **TRANSFORMATORANORDNUNG**

TRANSFORMER ARRANGEMENT

MONTAGE TRANSFORMATEUR

(84) Benannte Vertragsstaaten:
**AT DE SE**

(30) Priorität: **29.03.1996 DE 19612744**

(43) Veröffentlichungstag der Anmeldung:
**13.01.1999 Patentblatt 1999/02**

(73) Patentinhaber: **SIEMENS AKTIENGESELLSCHAFT 80333 München (DE)**

(72) Erfinder: **MÜLLER, Walter D-82449 Uffing (DE)**

(56) Entgegenhaltungen:
**EP-A- 0 152 002          WO-A-94/27351**
**DE-A- 1 941 047          DE-A- 4 343 929**

• **IEEE TRANSACTIONS ON POWER DELIVERY, Bd. 9, Nr. 3, 1.Juli 1994, Seiten 1678-1684, XP000485009 NELSON R J: "TRANSMISSION POWER PLOW CONTROL: ELECTRONIC VS. ELECTROMAGNETIC ALTERNATIVES FOR STEADY-STATE SOPERATION"**

## Beschreibung

Die Erfindung betrifft eine Transformatoranordnung gemäß dem Oberbegriff des Anspruchs 1 (DE-AS 19 41 047).

Um den Energiefluß auf einer Übertragungsleitung für elektrische Energie, z.B. auf einer Hochspannungsleitung, nach Bedarf steuern zu können, werden sogenannte Schräg- oder Zusatztransformatoranordnungen verwendet. Dabei werden Längsund/oder Querspannungen oder -ströme beliebiger Phasenlage in die Übertragungsleitung eingekoppelt.

Eine derartige Anordnung umfaßt in der Regel einen mit zumindest einer seiner Wicklungen in die Übertragungsleitung geschalteten Zusatztransformator, der über einen Erregertransformator mit Energie versorgt ist. Die beiden Transformatoren, üblicherweise auch als Transformator-Aggregat bezeichnet, können über ein Steuerglied, z.B. einen Umrichter oder einen Umrichtersatz, miteinander verbunden sein. Eine derartige Anordnung ist beispielsweise aus der DE 43 43 992 bekannt. In der Literatur werden derartige Anordnungen auch als UPFC (Unified Power Flow Controller) bezeichnet.

Bei den bekannten Anordnungen nach dem Stand der Technik ist die für die Bemessung maßgebliche Durchgangsleistung der gesamten Anordnung das Produkt aus maximalem Netzstrom multipliziert mit der maximalen Zusatzspannung. Im Grenzfall, bei dem der Strom auf einer parallelen ungesteuerten Übertragungsleitung gleich Null ist und der Gesamtstrom über die gesteuerte Übertragungsleitung fließt, muß vom Zusatztransformator die volle Durchgangsleistung aufgebracht werden.

Der Erfindung liegt die Aufgabe zugrunde, eine Transformatoranordnung zur Energieflußsteuerung bei zumindest zwei miteinander verbundenen Übertragungsleitungen anzugeben, wobei bei geringem Aufwand eine Steuerung auf beiden Übertragungsleitungen erlaubt.

Die Lösung der Aufgabe gelingt erfindungsgemäß mit einer Transformatoranordnung zum Einspeisen einer Zusatzspannung in eine erste Übertragungsleitung für elektrische Energie, mit einem Zusatztransformator, der mit zumindest einer seiner Wicklungen mit der ersten Übertragungsleitung in Serie schaltbar und über einen Erregertransformator mit Energie versorgt ist, wobei die Wicklung eine Mittenanzapfung hat, die die Wicklung in zwei Teilwicklungen unterteilt, und wobei zur Verbindung der ersten Übertragungsleitung mit einer zweiten Übertragungsleitung die eine Teilwicklung mit der ersten Übertragungsleitung und die andere Teilwicklung mit der zweiten Übertragungsleitung schaltbar ist, derart, daß die Mittenanzapfung einen Netzknoten bildet.

Auf diese einfache Weise ist der Energiefluß auf beiden Übertragungsleitungen gleichzeitig steuerbar, wobei die Steuerbarkeit für beide Übertragungsleitungen gekoppelt ist. Es werden keine zusätzlichen Mittel benötigt. Für die Grenzfälle, bei denen nur jeweils die eine der Teilwicklungen vom maximalen Strom Ig durchflossen ist, ergibt sich die maßgebliche Durchgangsleistung P für die Transformatoranordnung nach der Beziehung

$$P = 0,5 \times I_g \times U_z,$$

wobei mit $U_z$ die Zusatzspannung bezeichnet ist. Bei jeder anderen Stromaufteilung erfolgt eine Leistungsübertragung der phasengleichen Stromanteile zwischen den Teilwicklungen, die den Erregertransformator nicht belasten. Bei gleichem Strom auf beiden Übertragungsleitungen befindet sich die Transformatoranordnung unabhängig von der hierfür erforderlichen Zusatzspannung im Leerlauf. Die Mittenanzapfung kann dabei zur Energieweiterleitung an ein Netz oder an eine weiterführende Übertragungsleitung angeschlossen sein.

Es können auch eine dritte und vierte Übertragungsleitung vorgesehen sein, die ebenfalls über jeweilige Teilwicklungen eines zweiten Zusatztransformators miteinander verbunden sind, wobei die Mittenanzapfung beider Zusatztransformatoren miteinander verbindbar sind und einen Netzknoten bilden. Auf diese Weise ist quasi ein gesteuerter Netzknoten gebildet, wobei ein Leistungsfluß zwischen beliebigen Leitungspaaren einstellbar ist.

Dabei können mit Vorteil beide Zusatztransformatoren über den selben Erregertransformator mit Energie versorgt sein. Damit ist der Aufwand im Erregerkreis gering gehalten. Alternativ können die Zusatztransformatoren über separate Erregertransformatoren mit Energie versorgt sein. Dadurch ist gegebenenfalls eine günstige Aufstellung und eine völlig unabhängige Steuerung möglich.

Die Mittenanzapfung/en kann/können an die Oberspannungsseite des/der Erregertransformators/en schaltbar sein. Der Erregertransformator kann somit unabhängig von der Spannung auf den Übertragungsleitungen betrieben werden. Dies ist insbesondere im Fehlerfall günstig.

Es ist von Vorteil, wenn der Erregertransformator als Maschinentransformator dient und an seine unterspannungsseitige Wicklung ein Generator anschließbar ist. Der Erregertransformator erfüllt somit eine Doppelfunktion. Je nach Auslegung der Transformatoranordnung kann also ein Transformator eingespart werden.

Es ist günstig, wenn jeweils zwischen Zusatztransformator und zugeordnetem Erregertransformator ein Steuerglied schaltbar ist. Aus diese Weise ist der Energiefluß besonders gut einstellbar. Mit Vorteil dient dabei als Steuerglied eine Umrichteranordnung. Damit ist ein gutes Steuerverhalten erzielbar. Bevorzugt kommen dabei Halbleiterventile, beispielsweise Thyristoren als Stromrichter zum Einsatz.

Die Umrichteranordnung kann einen Gleichenergiezwischenkreis, insbesondere einen Gleichstrom- oder -spannungszwischenkreis, aufweisen. Dadurch ist eine Entkopplung von Energiequelle und dem eigentlichen Erregerkreis gegeben.

Die Transformatoranordnung weise bevorzugt eine Phasenanzahl auf, die gleich der Phasenanzahl der Übertragungsleitungen ist. Die bevorzugte Anwendung ist dabei für Drehstromnetze, insbesondere Dreileiter-Drehstromnetze, gegeben.

Die Mittenanzapfung kann einen Abgriff bei etwa 50 % der Gesamtwindungszahl oder einen abweichenden Wert haben. Damit symmetrische oder asymmetrische Teilwicklungen - je nach Netzanforderung - gebildet werden.

Ausführungsbeispiele der Erfindung, weitere Vorteile und Details werden nachfolgend anhand der Zeichnung näher erläutert. Es zeigen:

FIG 1          eine erste Transformatoranordnung,
FIG 2          eine zweite Transformatoranordnung,
FIG 3          eine Mehrfachtransformatoranordnung, und
FIG 4 und 5    Wicklungsausführungen für die Transformatoren.

Die nachfolgend beschriebenen Ausführungen sind beispielhaft in einer einpoligen Prinzipdarstellung gezeigt. Selbstverständlich sind diese mehrphasig, insbesondere dreiphasig, -entsprechend der Phasenanzahl der angeschlossenen Netze oder Übertragungsleitungen - ausführbar.

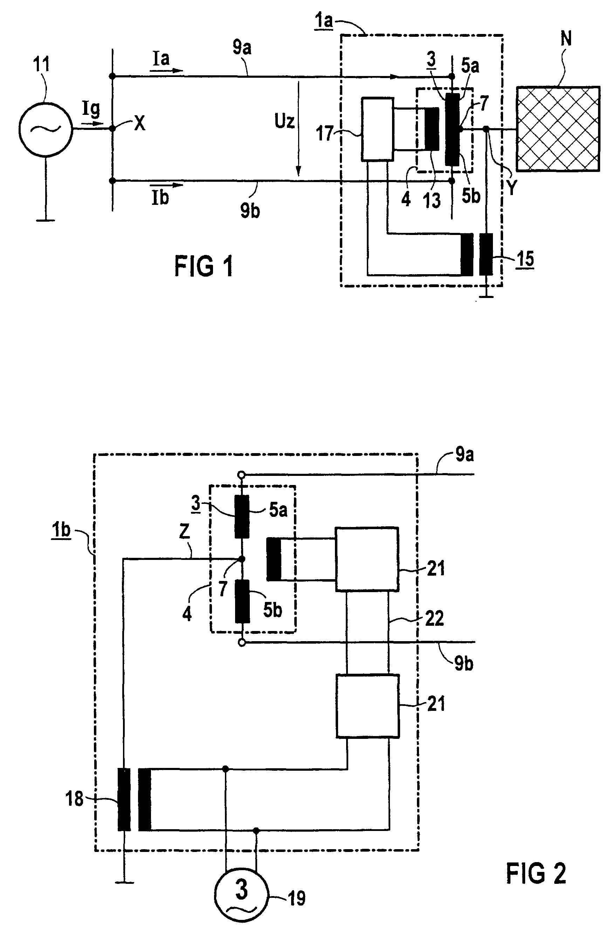

Figur 1 zeigt eine erste Transformatoranordnung 1a, bei der eine erste oberspannungsseitige Wicklung 3 eines Zusatztransformators 4 in zwei Teilwicklungen 5a und 5b unterteilt ist. Die Verbindungsstelle zwischen den beiden Teilwicklungen 5a, 5b bildet eine Mittenanzapfung 7. Die beiden Teilwicklungen 5a, 5b sind jeweils mit einer elektrischen Übertragungsleitung 9a bzw. 9b in Serie geschaltet, die mit ihren freien Enden miteinander verbunden und mit einem Netz oder, wie beispielhaft gezeigt, mit einem Generator verbunden sind und dabei einen Netzknoten X bilden.

Die Mittenanzapfung 7 bildet einen Netzknoten Y, der an ein weiteres Netz N, an einen Verbraucher oder an sonstige elektrische Einrichtungen angeschlossen werden kann.

Zur Steuerung des Energieflusses auf den beiden Übertragungsleitungen 9a und 9b muß von der ersten Wicklung 3 eine Zusatzspannung oder ein Zusatzstrom eingeprägt werden. Der Zusatztransformator 4 weist dazu eine Unterspannungs- oder Zwischenkreiswicklung 13 auf, die von einem Erregertransformator 15 mit Energie versorgt ist. Zur genauen Steuerung des Energieflusses ist ein Steuerglied 17 vorgesehen, das beispielsweise als Umsteller oder auch als Umrichteranordnung mit gesteuerten Ventilen, insbesondere als Stromrichter, ausgebildet sein kann.

Mit der vorliegenden Transformatoranordnung 1a kann bevorzugt der Energiefluß auf Hochspannungsübertragungsleitungen gesteuert werden. Gegebenenfalls ist auch eine Verbindung einer Energieflußsteuerung mit einer Schutzüberwachung der Hochspannungsleitung möglich, so daß beispielsweise im Fehlerfall mit reduzierter Übertragungsleistung noch ein Betrieb möglich ist, oder daß beispielsweise ohne Totalausfall einer Leitung ein Hilfsbetrieb oder eine Fehlerbeseitigung möglich ist.

Durch die Mittenanzapfung am Zusatztransformator 4 für den symmetrischen Fall ist eine Halbierung der Wicklungsleistung gegeben, die den Erregertransformator, das Steuerglied und die Unterspannungs- oder Zwischenkreiswicklung des Zusatztransformators 4 betrifft.

Zur Steuerung der Stromaufteilung im von den Übertragungsleitungen 9a, 9b gebildeten Ringnetz steht die gesamte Zusatzspannung Uz zur Verfügung. In den Grenzfällen, bei denen der Strom Ia oder Ib auf einer der Leitungen gleich dem Gesamtstrom Ig ist (Ia = Ig oder Ib = Ig) wird nur eine der Teilwicklungen 5a oder 5b von Strom durchflossen. Daher ergibt sich für die Bemessung der Gesamttransformatoranordnung die Durchgangsleistung zu

$$1/2 \times Uz \times Ig.$$

Bei jeder anderen Stromaufteilung erfolgt eine Leistungsübertragung der phasengleichen Stromanteile zwischen den Teilwicklungen 5a, 5b, die den Erregertransformator 15 und das Steuerglied 17 nicht belasten. Für Ia = Ib befindet sich die Transformatoranordnung 1a unabhängig von der hierfür erforderlichen Zusatzspannung Uz im Leerlauf.

Selbstverständlich können die Knoten X und Y ihre Funktion als Einspeiseknoten bzw. Abnahmeknoten tauschen. Der Erregertransformator 15 bezieht seine Energie gegebenenfalls von einem weiteren Netz, einer sonstigen Energiequelle oder, wie gezeigt, vom Knoten Y.

Figur 2 zeigt eine zweite Transformatoranordnung 1b, bei der von einem Generator 19 Energie in die zwei Übertragungsleitungen 9a und 9b gesteuert eingespeist werden soll. Der Generator 19 ist dabei über einen Maschinentransformator 18 an die als Netzknoten Z dienende Mittenanzapfung 7 der Wicklung 3 geführt. Diese ist, wie bereits oben beschrieben, mit den beiden Übertragungsleitungen 9a und 9b verbunden. Der vorliegende Maschinentransformator 18 dient hier gleichzeitig als Erregertransformator.

Der Zusatztransformator 4 ist über eine als Steuerglied dienende Umrichteranordnung 21 mit Energie versorgt. Die Umrichteranordnung 21 weist bevorzugt einen Gleichenergiezwischenkreis 22, insbesondere einen Strom- oder Spannungszwischenkreis, auf.

Bei dieser Ausführung wird der gesamte Erregertransformator eingespart, da diese Funktion von dem ohnehin vorhandenen Maschinentransformator 18 übernommen wird.

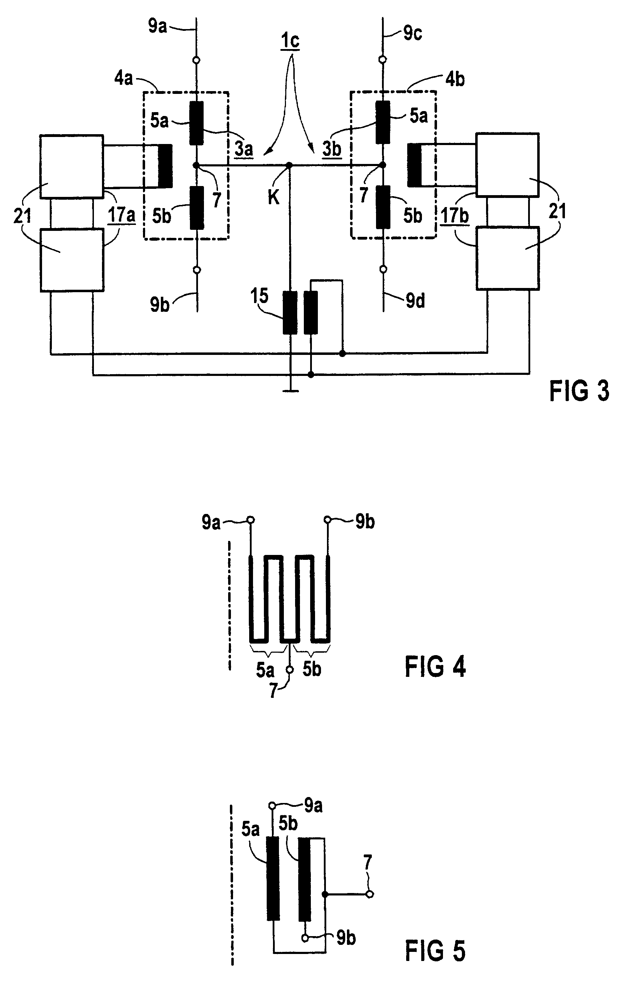

Figur 3 zeigt eine Transformatoranordnung 1c als Mehrfachanordnung, bei der jeweils über einen Zusatztransformator 13a bzw. 13b gekoppelte Übertragungsleitungen 9a bis 9c paarweise über zugeordnete Wicklungen 3a, 3b mit Mittenanzapfungen 7 zu einem Netzknoten K verbunden sind. Es ergeben sich dabei bis zu sechs mögliche Leitungspaarungen, bei denen der Energiefluß gesteuert werden kann, nämlich:

9a - 9b, 9a - 9c, 9a - 9d, 9b - 9c, 9b - 9d und 9c - 9d.

Selbstverständlich sind auch Mehrfachverbindungen möglich. Hierdurch ist quasi eine Tandemschaltung gebildet, wobei bevorzugt jeder Zusatztransformator 4a,4b jeweils ein zugeordnetes Steuerglied 17a bzw. 17b (mit jeweiligen Gleich- und Umrichter) hat. Günstig ist bei dieser Ausführung, daß lediglich ein gemeinsamer Erregertransformator 15 benötigt wird. Es ist dabei auch eine Ausführung denkbar, bei der jedem Zusatztransformator 13a,13b jeweils nur ein Umrichter als Steuerglied zugeordnet ist und bei der die beiden Umrichter über einen gemeinsamen, von einem Gleichrichter versorgten Gleichenergiezwischenkreis mit dem Erregertransformator 15 verbunden sind. Auf diese Weise kann auch ein Gleichrichter eingespart werden.

Unter dem Begriff Mittenanzapfung wird vorliegend eine Anzapfung an der Wicklung verstanden, die nicht zwangsläufig direkt "in der Mitte" oder genau bei halber Gesamtwindungszahl liegen muß. Je nach Anforderung der anzuschließenden Leitungen kann nämlich eine symmetrische oder unsymmetrische Aufteilung vorgesehen werden.

FIG 4 zeigt hierzu beispielhaft Lagenwicklung mit 2n Lagen konstanter Lagenwicklungsanzahl, bei der die Mittenanzapfung 7 symmetrische Teilwicklungen 5a, 5b bildet. Eine symmetrische Ausführung einer Spulenwicklung könnte entsprechend FIG 5 geschaltet sein, bei der durch die dortigen Röhrenteilwicklungen 5a,5b unzulässige Querstreuflüsse vermieden sind.

Selbstverständlich sind einzelne Merkmale der aufgezeigten Ausführungen wahlweise miteinander kombinierbar, ohne daß der Grundgedanke der Idee verlassen wird. Wesentlicher Grundgedanke ist, daß der Zusatztransformator einen zweigeteilten Aufbau aufweist, wobei zwei Übertragungsleitungen gleichzeitig anschließbar sind.

**Patentansprüche**

1. Transformatoranordnung (1a,1b,1c) zum Einspeisen einer Zusatzspannung (Uz) in eine erste Übertragungsleitung (9a) für elektrische Energie, mit einem Zusatztransformator (4,4a,4b), der mit zumindest einer seiner Wicklungen (3) mit der ersten Übertragungsleitung (9a) in Serie schaltbar und über einen Erregertransformator (15) mit Energie versorgt ist, welche Wicklung (3) eine Mittenanzapfung (7) hat, die die Wicklung in zwei Teilwicklungen 5a,5b unterteilt,
**dadurch gekennzeichnet, daß** zur Verbindung der ersten Übertragungsleitung (9a) mit einer zweiten Übertragungsleitung (9b) die eine Teilwicklung (5a) mit der ersten Übertragungsleitung (9a) und die andere Teilwicklung (5a) mit der zweiten Übertragungsleitung (9b) in Serie schaltbar ist, derart, daß die Mittenanzapfung (7) einen Netzknoten (Y) bildet.

2. Transformatoranordnung nach Anspruch 1, **dadurch gekennzeichnet, daß** eine dritte und vierte Übertragungsleitung (9c,9d) vorgesehen sind, die ebenfalls über jeweilige Teilwicklungen eines zweiten Zusatztransformators (4b) miteinander verbunden sind, wobei die Mittenanzapfungen (7) beider Zusatztransformatoren (4a,4b) miteinander verbindbar sind und einen Netzknoten (K) bilden.

3. Transformatoranordnung nach Anspruch 2, **dadurch gekennzeichnet, daß** beide Zusatztransformatoren (4a,4b) über den selben Erregertransformator (15) mit Energie versorgt sind.

4. Transformatoranordnung nach Anspruch 2, **dadurch gekennzeichnet, daß** die Zusatztransformatoren (4a,4b) über separate Erregertransformatoren mit Energie versorgt sind.

5. Transformatoranordnung nach einem der Ansprüche 1 bis 4, **dadurch gekennzeichnet, daß** die Mittenanzapfung/en (7) an die Oberspannungsseite des/der Erregertransformators/en (15,18) schaltbar ist/sind.

6. Transformatoranordnung nach einem der Ansprüche 1 bis 5, **dadurch gekennzeichnet, daß** der Erregertransformator als Maschinentransformator (18) dient, wobei an seine unterspannungsseitige Wicklung (13) ein Generator (19) anschließbar ist.

7. Transformatoranordnung nach einem der Ansprüche 1 bis 7, **dadurch gekennzeichnet, daß** jeweils zwischen Zusatztransformator (4,4a,4b) und zugeordnetem Erregertransformator (15,18) ein Steuerglied (17,17a,17b) schaltbar ist.

8. Transformatoranordnung nach Anspruch 7, **dadurch gekennzeichnet, daß** als Steuerglied (17,17a,17b) eine Umrichteranordnung (21) dient.

9. Transformatoranordnung nach Anspruch 8, **dadurch gekennzeichnet, daß** die Umrichteranordnung (21) einen Gleichenergiezwischenkreis (22) aufweist.

**10.** Transformatoranordnung nach einem der Ansprüche 1 bis 9, **dadurch gekennzeichnet, daß** die Phasenanzahl gleich der Phasenanzahl der Übertragungsleitungen (9a bis 9d) ist.

**11.** Transformatoranordnung nach einem der Ansprüche 1 bis 10, **dadurch gekennzeichnet, daß** die Mittenanzapfung/en (7) den Abgriff bei etwa 50 % der Gesamtwindungszahl der Wicklung (3) hat/haben.

**12.** Transformatoranordnung nach einem der Ansprüche 1 bis 10, **dadurch gekennzeichnet, daß** die Mittenanzapfung (7) den Abgriff bei 50 % der Gesamtwindungszahl der Wicklung (3) hat.

## Claims

**1.** Transformer arrangement (1a, 1b, 1c) for feeding an additional voltage (Uz) into a first transmission line (9a) for electrical power, having an additional transformer (4, 4a, 4b), at least one of whose windings (3) can be connected in series with the first transmission line (9a) and which is supplied with power via an exciter transformer (5), which winding (3) has a centre tap (7) which subdivides the winding into two winding elements 5a, 5b, **characterized in that**, in order to connect the first transmission line (9a) to a second transmission line (9b), the one winding element (5a) can be connected in series with the first transmission line (9a), and the other winding element (5a) can be connected in series with the second transmission line (9b), in such a manner that the centre tap (7) forms a network node (Y).

**2.** Transformer arrangement according to Claim 1, **characterized in that** a third and a fourth transmission line (9c, 9d) are provided, which are likewise connected to one another via respective winding elements of a second additional transformer (4b), in which case the centre taps (7) of the two additional transformers (4a, 4b) can be connected to one another, and form a network node (K).

**3.** Transformer arrangement according to Claim 2, **characterized in that** the two additional transformers (4a, 4b) are supplied with power via the same exciter transformer (15).

**4.** Transformer arrangement according to Claim 2, **characterized in that** the additional transformers (4a, 4b) are supplied with power via separate exciter transformers.

**5.** Transformer arrangement according to one of Claims 1 to 4, **characterized in that** the centre tap or taps (7) can be connected to the high-voltage side of the exciter transformer or transformers (15, 18).

**6.** Transformer arrangement according to one of Claims 1 to 5, **characterized in that** the exciter transformer is used as a machine transformer (18), in which case a generator (19) can be connected to its low-voltage-side winding (13).

**7.** Transformer arrangement according to one of Claims 1 to 7, **characterized in that** a control element (17, 17a, 17b) can be connected between each additional transformer (4, 4a, 4b) and the associated exciter transformer (15, 18).

**8.** Transformer arrangement according to Claim 7, **characterized in that** a converter arrangement (21) is used as the control element (17, 17a, 17b).

**9.** Transformer arrangement according to Claim 8, **characterized in that** the converter arrangement (21) has a DC intermediate circuit (22).

**10.** Transformer arrangement according to one of Claims 1 to 9, **characterized in that** the number of phases is equal to the number of phases of the transmission lines (9a to 9d).

**11.** Transformer arrangement according to one of Claims 1 to 10, **characterized in that** the centre tap or taps (7) has or have the tap at approximately 50% of the total number of turns on the winding (3).

**12.** Transformer arrangement according to one of Claims 1 to 10, **characterized in that** the centre tap (7) has the tap at 50% of the total number of turns on the winding (3).

## Revendications

**1.** Montage (1a, 1b, 1c) transformateur pour injecter une tension (Uz) supplémentaire dans une première ligne (9a) de transmission pour de l'énergie électrique, comportant un transformateur (4, 4a, 4b) supplémentaire qui peut être branché en série par au moins l'un de ses enroulements (3) avec la première ligne (9a) de transmission et qui est alimenté en énergie par l'intermédiaire d'un transformateur (15) excitateur dont l'enroulement (3) a une prise (7) médiane qui subdivise l'enroulement en deux sous-enroulements (5a, 5b), **caractérisé en ce que**, pour relier la première ligne (9a) de transmission à une deuxième ligne (9b) de transmission, l'un (5a) des sous-enroulements peut être branché en série avec la première ligne (9a) de transmission et l'autre sous-enroulement (5a) peut être branché en série avec la deuxième ligne (9b) de transmission si bien que la prise (7) médiane forme un point (Y) nodal du réseau.

2. Montage transformateur suivant la revendication 1, **caractérisé en ce qu'**il est prévu une troisième et une quatrième lignes (9c, 9d) de transmission qui sont reliées l'une à l'autre également par l'intermédiaire de sous-enroulements associés d'un deuxième transformateur (4b) supplémentaire, les prises (7) médianes et deux transformateurs (4a, 4b) supplémentaires pouvant être reliées l'une à l'autre et formant un point (K) nodal du réseau.

3. Montage transformateur suivant la revendication 2, **caractérisé en ce que** les deux transformateurs (4a, 4b) supplémentaires sont alimentés en énergie par l'intermédiaire du même transformateur (15) excitateur.

4. Montage transformateur suivant la revendication 2, **caractérisé en ce que** les transformateurs (4a, 4b) supplémentaires sont alimentés en énergie par l'intermédiaire de transformateurs excitateurs distincts.

5. Montage transformateur suivant l'une des revendications 1 à 4, **caractérisé en ce que** la/les prise(s) (7) médiane(s) peuvent être branchées au côté haute tension du/des transformateur(s) (15, 18) excitateur(s).

6. Montage transformateur suivant l'une des revendications 1 à 5, **caractérisé en ce que** le transformateur excitateur sert de transformateur (18) rotatif, une génératrice (19) pouvant être raccordée à son enroulement (13) côté basse tension.

7. Montage transformateur suivant l'une des revendications 1 à 7, en ce qu'il peut être branché respectivement un élément (17, 17a, 17b) de commande entre un transformateur (4, 4a, 4b) supplémentaire et un transformateur (15, 18) excitateur associé.

8. Montage transformateur suivant la revendication 7, **caractérisé en ce qu'**un dispositif (21) mutateur sert d'élément (17, 17a, 17b) de commande.

9. Montage transformateur suivant la revendication 8, **caractérisé en ce que** le montage (21) mutateur comporte un circuit (22) intermédiaire de courant continu.

10. Montage transformateur suivant l'une des revendications 1 à 9, **caractérisé en ce que** le nombre de phases est égal au nombre de phases des lignes (9a à 9d) de transmission.

11. Dispositif transformateur suivant l'une des revendications 1 à 10, **caractérisé en ce que** la/les prise (s) (7) médiane(s) est (sont) à environ 50 % du nombre total de spires de l'enroulement (3).

12. Montage transformateur suivant l'une des revendications 1 à 10, **caractérisé en ce que** la prise (7) médiane est à environ 50 % du nombre total de spires de l'enroulement.

FIG 1

FIG 2

FIG 3

FIG 4

FIG 5